# EUROPÄISCHE PATENTSCHRIFT

(11) **EP 2 799 925 B1**
(45) Veröffentlichungstag und Bekanntmachung des Hinweises auf die Patenterteilung: **19.08.2020**
(21) Anmeldenummer: 14001250.1
(22) Anmeldetag: 04.04.2014
(51) Int. Cl.: G02B 27/48, G01S 17/89

(54) **Laserzielbeleuchtungsvorrichtung sowie Verfahren zum Steuern der Laserzielbeleuchtungsvorrichtung**
Laser target lighting device and method for controlling the laser target lighting device
Dispositif d'éclairage d'une cible par un laser et procédé de commande du dispositif d'éclairage

(30) Priorität: 19.04.2013 DE 102013006813
(43) Veröffentlichungstag der Anmeldung: 05.11.2014
(73) Patentinhaber: MBDA Deutschland GmbH, 86529 Schrobenhausen (DE)
(72) Erfinder: Protz, Rudolf, 85635 Höhenkirchen-Siegertsbrunn (DE)
(74) Vertreter: Isarpatent

(56) Entgegenhaltungen:
- JP-A- 2011 128 639
- US-A1- 2002 154 375
- US-A1- 2009 213 350
- US-A1- 2012 218 615
- DAVID OXFORD ET AL: "<title>Comparison of speckle reduction techniques on the identification of human activities in laser range-gated SWIR imaging</title>", PROCEEDINGS OF SPIE, Bd. 7662, 21. April 2010 (2010-04-21), Seite 766206, XP055134802, ISSN: 0277-786X, DOI: 10.1117/12.850735
- Ronald G Driggers ET AL: "Impact of speckle on laser range-gated shortwave infrared imaging system target identification performance", Optical Engineering, 7. März 2003 (2003-03-07), Seite 738, XP055134790, DOI: 10.1117/1.1543159 Gefunden im Internet: URL:http://search.proquest.com/docview/233 447904 [gefunden am 2014-09-09]

## Beschreibung

Die vorliegende Erfindung betrifft eine Laserzielbeleuchtungsvorrichtung sowie ein Verfahren zum Beleuchten eines Ziels mit dieser Laserzielbeleuchtungsvorrichtung.

Aus dem Stand der Technik sind mehrere aktive Laserzielbeleuchtungsgeräte sowie Laserzielbeleuchtungsverfahren bekannt, bei denen ein Zielobjekt mittels Laserstrahlung beleuchtet wird. Insbesondere ist das Range-Gating-Verfahren bekannt, bei dem gepulste Laserstrahlung verwendet wird, um eine Zieloberfläche zu beleuchten, so dass geeignete Kameras die reflektierte Strahlung dieser Beleuchtung erfassen können. Durch das Pulsen der Laserstrahlung ist es möglich, eine Entfernung zu der Zieloberfläche zu bestimmen. Weiterhin wird die Laserzielbeleuchtung im Stand der Technik bei aktiven optischen Tracking-Verfahren von schnell bewegten Zielen verwendet. Andere Beleuchtungsvorrichtungen sind aus der US 2009/0213350 A1 sowie aus der US 2002/0154375 A1 bekannt.

Die Druckschrift David Oxford et al., "Comparison of Speckle Reduction Techniques on the Identification of Human Activities in Laser Range-Gated SWIR Imaging," PROCEEDINGS OF SPIE, Bd. 7662, ISSN: 0277-786X, Seite: 766206, 21. April 2010 vergleicht unterschiedliche Techniken zur Reduzierung von Specklemustern in laserbasierten Systemen, die im kurzwelligen Infrarot arbeiten.

Es kann jedoch aufgrund der Kohärenz der bei der Laserzielbeleuchtung üblicherweise verwendeten Laserstrahlung und der Einwirkung der auf dem Strahlengang auftretenden atmosphärischen Turbulenzen sowie der nicht ideal ebenen Oberflächenstruktur des Ziels zu interferenzbedingte Störungen kommen, die auch Speckle-Effekte genannt werden. Diese Speckle-Effekte entstehen durch starke lokale Intensitätsschwankungen des reflektierten Lichts, wobei dadurch die Bildqualität stark verringert wird. Eine solche verringerte Bildqualität erschwert jedoch eine nachfolgende elektronische Auswertung, was insbesondere ein optisches Tracking-Verfahren oftmals unmöglich macht.

Es ist Aufgabe der vorliegenden Erfindung, eine Laserzielbeleuchtungsvorrichtung bereitzustellen, die bei einfacher und kostengünstiger Herstellung und Montage und bei zuverlässigem und wartungsarmem Betrieb eine hohe Bildqualität der beleuchteten Objekte ermöglicht. Es ist weiter Aufgabe der Erfindung, ein Verfahren zum Beleuchten eines Ziels anzugeben, das bei einfacher und kostengünstiger Anwendung das Aufnehmen von qualitativ hochwertigen Bildern eines beleuchteten Objekts ermöglicht.

Gelöst wird die Aufgabe durch die Merkmale der Ansprüche 1 und 5. Die Unteransprüche haben bevorzugte Weiterbildungen der Erfindung zum Inhalt.

Somit wird die Aufgabe gelöst durch eine Laserzielbeleuchtungsvorrichtung, die zur Beleuchtung eines zu bekämpfenden Ziels geeignet ist. Die erfindungsgemäße Beleuchtungsvorrichtung umfasst eine Lichtquelle, die eine gepulste Laserlichtquelle ist. Die Lichtquelle ist eingerichtet, Licht entlang eines Strahlengangs auszusenden. In den Strahlengang ist weiterhin ein erster Modulator eingebracht, wobei der Modulator eingerichtet ist, eine Richtung des Strahlengangs in einer ersten Ebene auszulenken. Daher ist vorgesehen, dass der Modulator die von der Lichtquelle ausgehende Lichtstrahlung um einen vordefinierten Winkel auslenken kann. Es ist vorgesehen, dass der erste Modulator akusto-optischer Modulator ist. Zusätzlich ist im Strahlengang eine Phasenplatte vorhanden, die eine Vielzahl von optischen Dicken aufweist. Erfindungsgemäß ist die Phasenplatte hinter dem ersten Modulator angeordnet, so dass das Licht der Lichtquelle zunächst durch den Modulator ablenkbar ist, bevor dieses die Phasenplatte trifft. Die Vielzahl von unterschiedlichen optischen Dicken der Phasenplatte kann bevorzugt dadurch realisiert sein, dass die Phasenplatte eine unebene Oberfläche aufweist. Somit entstehen statistisch verteilt optische Wegeunterschiede des Lichts innerhalb des Strahlengangs. Besonders bevorzugt ist vorgesehen, dass diese optischen Wegeunterschiede im Mittel wenige Bruchteile der Wellenlänge des von der Lichtquelle ausgesandten Lichts betragen. Eine Steuervorrichtung ist mit der Lichtquelle und dem ersten Modulator verbunden, so dass die Steuervorrichtung die Lichtquelle und den ersten Modulator zeitlich synchron und den ersten Modulator mit unterschiedlichen Frequenzen ansteuern kann. Auf diese Weise überstreicht der Strahlengang für einen jeweiligen Steuerzeitraum einen Winkelbereich, der sich von dem unausgelenkten Zustand bis zu einem maximal ausgelenkten Zustand bei einem zufällig bestimmten ersten Winkel erstreckt, um anschließend wieder in die unausgelenkte Lage zurückgelenkt zu werden, und somit entsprechend der jeweiligen Frequenzen über einen zufällig bestimmten Bereich der Phasenplatte ausgelenkt wird, sodass über einen Querschnitt des Strahlengangs statistisch verteilte optische Wegeunterschiede entstehen. Das Ausmaß des ersten Zeitraums sowie des ersten Winkels ist dabei von der Steuervorrichtung individuell festlegbar. Besonders bevorzugt ist jedoch vorgesehen, dass der erste Winkel maximal 5 Millirad beträgt, während der Steuerzeitraum im Bereich von (einschließlich) 1 bis 10 Nanosekunden liegt.

Gemäß der Erfindung ist vorgesehen, dass die Lichtquelle Lichtpulse aussendet. Besonders bevorzugt ist vorgesehen, dass ein Lichtpuls die Dauer des Steuerzeitraums aufweist, so dass der erste Modulator synchron zu der Abstrahlung von Lichtpulsen angesteuert werden kann. Auf diese Weise ist es vorteilhaft möglich, jeden der ausgesendeten Lichtpulse bis zu einem vorbestimmten Winkel auszulenken. Daher ist eine breite Streuung der Beleuchtung möglich. Alternativ ist ebenso besonders bevorzugt vorgesehen, dass die Lichtquelle während des Steuerzeitraums mehrere Lichtpulse aussendet. In jedem Fall ist gemäß der Erfindung vorgesehen, dass während des Steuerzeitraums zumindest ein vollständiger Lichtpuls ausgesendet wird. Somit ist bevorzugt sichergestellt, dass jeder Lichtpuls vollständig von dem ersten Modulator ausgelenkt werden kann.

Gemäß der Erfindung ist vorgesehen, dass der erste Modulator ein akusto-optischer Modulator ist. Besonders bevorzugt ist der erste Modulator eine Bragg-Zelle. Daher umfasst der erste Modulator insbesondere ein durchsichtiges Trägermaterial, durch das eine, insbesondere akustische, Welle geleitet wird. Durch die akustische Welle entstehen unterschiedliche optische Dichten innerhalb des Trägermaterials, so dass eine Beugung des Strahlengangs an einem aus den unterschiedlichen optischen Dichten resultierenden optischen Gitter ausgeführt werden kann. Auf diese Weise ist der Strahlengang manipulierbar. Durch das Ansteuern des ersten Modulators mit verschiedenen Frequenzen, das bedeutet das Aussenden von unterschiedlichen Schallwellen, kann der Grad der Auslenkung verändert werden. Somit ist es bevorzugt möglich, die Manipulation des Strahlengangs sehr variabel zu gestalten. Besonders bevorzugt wird der erste Modulator mit Frequenzen angesteuert, die zumindest 100 MHz betragen.

Vorteilhafterweise weisen Differenzen der optischen Dicken und der Phasenplatte einen Wert auf, der 1 µm, insbesondere 5 µm, nicht unterschreitet. Alternativ oder zusätzlich ist es bevorzugt vorgesehen, dass der Wert der Differenz der Vielzahl der optischen Dicken der Phasenplatte50 µm, besonders bevorzugt 10 µm, nicht überschreitet. Somit kann der von dem ersten Modulator ausgelenkte Strahlengang verschiedene optische Dicken der Phasenplattepassieren, wobei durch die verschiedenen optischen Dicken statistisch verteilte optische Wegeunterschiede entstehen. Durch die zuvor genannten Werte der Differenzen der optischen Dicken ist dennoch sichergestellt, dass diese Wegeunterschiede im Mittel wenige Bruchteile der Laserwellenlänge betragen, was für eine effektive Zielbeleuchtung optimale Voraussetzungen darstellt.

In einer vorteilhaften Ausführungsform der Erfindung umfasst das Beleuchtungssystem einen zweiten Modulator, der insbesondere mit dem ersten Modulator identisch ausgebildet ist. Der zweite Modulator ist bevorzugt eingerichtet, eine Richtung des Strahlengangs in einer zweiten Ebene auszulenken. Dabei ist die zweite Ebene insbesondere senkrecht zu der ersten Ebene angeordnet. Die Verwendung des zweiten Modulators ermöglicht daher in vorteilhafter Weise, den Strahlengang in sämtliche Raumrichtungen auszulenken. Somit kann die Vielfalt der möglichen Ablenkrichtungen erhöht werden, was eine effektive Variation der Wegunterschiede des Lichts ermöglicht.

Weiterhin weist die Beleuchtungsvorrichtung bevorzugt einen optischen Sensor auf, der insbesondere eine Kamera sein kann. Der optische Sensor ist bevorzugt eingerichtet, das von der Lichtquelle ausgesandte und von dem Ziel reflektierte Licht zu detektieren. Da die Lichtquelle insbesondere Lichtpulse aussendet, ist weiterhin besonders bevorzugt vorgesehen, dass mittels des Detektierens der reflektierten Lichtpulse durch den optischen Sensor eine Bestimmung einer Entfernung des Ziels zu der Beleuchtungsvorrichtung möglich ist.

Die erfindungsgemäße Beleuchtungsvorrichtung wie zuvor beschrieben ermöglicht eine effektive Reduzierung des eingangs beschriebenen Speckle-Effekts. Durch die Auslenkung des Strahlengangs mittels des ersten Modulators wird der Strahlengang durch verschiedene optische Dicken der Phasenplattegeleitet. Daher entstehen, wie bereits beschrieben, statistisch verteilte optische Wegeunterschiede. Auf diese Weise ist es möglich, örtliche und zeitliche Variationen der Phasenfronten der ausgesandten Lichtpulse im Querschnitt des Strahlengangs zu erzeugen. Somit können Wechselwirkungen mit atmosphärischen Störungen oder einer nicht ideal ebenen Zieloberfläche zu zeitlich und örtlich variierenden Speckle-Effekten führen. Durch eine zeitliche Mittelung dieser örtlichen und zeitlichen Variationen ist es möglich, den Einfluss des Speckle-Effekts auf die Gesamtmessung zu reduzieren.

Weiterhin ermöglicht die Beleuchtungsvorrichtung gemäß der Erfindung oder gemäß einer bevorzugten Weiterbildung der Erfindung, eine Beleuchtung des Ziels, bei der ein Intensitätsverlauf über den Strahlengang einem Plateau ähnelt. Im Gegensatz dazu würde bei herkömmlichen Beleuchtungsvorrichtungen eine Gauß-förmige Verteilung auftreten, wobei die Intensität zum Rand des Strahlengangs hin abnimmt. Daher ermöglicht die erfindungsgemäße Beleuchtungsvorrichtung eine gleichmäßige und damit optimierte Beleuchtung des Ziels.

Die Erfindung betrifft weiterhin ein Verfahren zum Beleuchten eines Ziels, wobei eine Beleuchtungseinrichtung mit den zuvor beschriebenen Merkmalen verwendet wird. Erfindungsgemäß werden die folgenden Schritte in der angegebenen Reihenfolge ausgeführt: Zunächst wird ein Lichtpuls durch die Lichtquelle ausgesandt. Anschließend wird der erste Modulator und/oder der zweite Modulator derart mit unterschiedlichen Frequenzen angesteuert, dass der Strahlengang einen Winkelbereich überstreicht, der sich von dem unausgelenkten Zustand bis zu einem maximal ausgelenkten Zustand bei einem zufällig bestimmten ersten Winkel erstreckt, um anschließend wieder in die unausgelenkte Lage zurückgelenkt zu werden, und somit entsprechend der jeweiligen Frequenzen über einen zufällig bestimmten Bereich der Phasenplatte ausgelenkt wird, sodass über den Querschnitt des Strahlengangs statistisch verteilte optische Wegeunterschiede entstehen. Der so manipulierte Lichtpuls wird bevorzugt auf das Ziel gerichtet, damit dieser dass Ziel beleuchten kann.

Gemäß der Erfindung werden die zuvor genannten Schritte des Aussendens und Ansteuerns kontinuierlich wiederholend ausgeführt. Daher ist besonders bevorzugt vorgesehen, dass die Lichtquelle kontinuierlich Lichtpulse aussendet, wobei die Lichtpulse in zufällig bestimmte Richtungen ausgelenkt werden. Somit entsteht die zuvor beschriebene zeitliche und räumliche Variation der Phasenfrontverteilung über den Querschnitt des Strahlengangs bei den unterschiedlichen ausgesandten Lichtpulsen.

Weiterhin ist erfindungsgemäß vorgesehen, dass die zusätzlichen folgenden Schritte ausgeführt werden: Zunächst wird jeder ausgesandte Lichtpuls empfangen, was insbesondere durch den optischen Sensor geschieht. Anschließend werden die Intensitäten der empfangenen Lichtpulse bestimmt, wobei bevorzugt auch die Phasenfrontenverteilung über den Querschnitt des reflektierten Strahlengangs bestimmt werden kann. Dabei wird ein zeitlicher Mittelwert der Intensität jedes Pulses bestimmt. Auf diese Weise ist es möglich, den Einfluss von Speckle-Effekten zu reduzieren, da durch das zuvor beschriebene Aussenden der Lichtpulse und Auslenken der Richtung der ausgesandten Lichtpulse der Speckle-Effekt räumlich und zeitlich variiert wird. Abschließend ist bevorzugt vorgesehen, dass aus den gemittelten Intensitätsdaten eine Abbildung erzeugt wird. Diese Abbildung ermöglicht insbesondere ein Durchführen eines optischen Treckingverfahrens, mit dem beispielsweise ein schnell bewegliches Ziel von einer Wirkeinheit verfolgt werden kann.

Die Erfindung wird nun anhand von Ausführungsbeispielen unter Bezugnahme auf die begleitenden Zeichnungen genauer beschrieben. In den Zeichnungen ist:
- Fig. 1: eine schematische Darstellung der Beleuchtungsvorrichtung gemäß einem ersten Ausführungsbeispiel der Erfindung,
- Fig. 2: eine schematische Darstellung der Phasenplatteder Beleuchtungsvorrichtung gemäß dem ersten Ausführungsbeispiel der Erfindung, und
- Fig. 3: eine schematische Darstellung eines Teils der Beleuchtungsvorrichtung gemäß einem zweiten Ausführungsbeispiel der Erfindung.

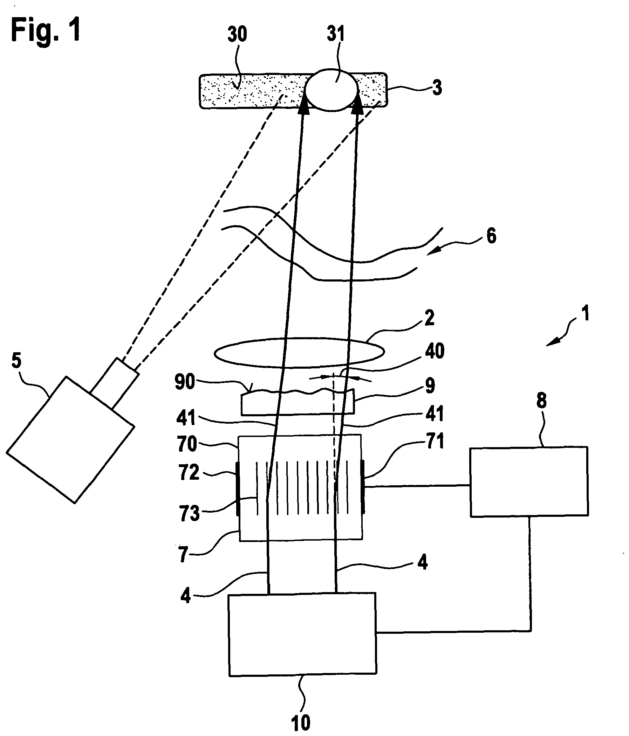

Fig. 1 zeigt eine Beleuchtungsvorrichtung 1, die eine Lichtquelle 10 umfasst, wobei die Lichtquelle 10 entlang eines Strahlengangs 4 gepulste Laserstrahlen aussendet. Ein optisches System 2 ist vorhanden, um den Strahlengang 4 auf ein zu beleuchtendes Ziel 3 zu fokussieren. Auf diese Weise kann ein Zielbereich 31 von der Lichtquelle 10 beleuchtet werden.

Zwischen dem optischen System 2 und der Lichtquelle 10 ist ein erster Modulator sowie eine Phasenplatte 9 angeordnet. Der erste Modulator 7 ist dabei eingerichtet, den Strahlengang 4 auszulenken, so dass der ausgelenkte Strahlengang 41 auf die Phasenplatte 9 trifft. Von der Phasenplatte 9 gelangt der Strahlengang 4 durch das optische System 2 zu dem Ziel 3.

Eine Steuervorrichtung 8 ist vorhanden und eingerichtet, die Lichtquelle 10 und den ersten Modulator 7 zeitlich synchron zueinander anzusteuern. Dazu ist der erste Modulator 7 insbesondere ein akusto-optischer Modulator, der einen für den Strahlengang 4 durchsichtigen Grundkörper 70 aufweist. An einem Rand des Grundkörpers 70 ist ein akustischer, insbesondere ein Ultraschall-basierter, Aktuator 71 angebracht, der eine akustische Welle 73 zu einem auf einer gegenüberliegenden Seite des Grundkörpers 70 angebrachten Absorber senden kann. Insbesondere ist vorgesehen, dass die zwischen Aktuator 71 und Absorber 72 gesendete akustische Welle 73 senkrecht zu dem Strahlengang 4 verläuft. Die akustische Welle 73 erzeugt somit unterschiedliche optische Dichten innerhalb des Grundkörpers 70, so dass der Modulator 7 in der Lage ist, den Strahlengang 4 auszulenken, da der Strahlengang 4 durch das entstehende optische Gitter gebeugt werden kann. Durch das Festlegen von unterschiedlichen Frequenzen der akustischen Welle 73 ist es möglich, einen ersten Winkel 40 zu bestimmen, bis zu dem der Strahlengang 4 maximal ausgelenkt wird. Dabei ist vorgesehen, dass der Ablenkwinkel 40 von der Steuervorrichtung 8 bestimmt werden kann, wobei die Steuervorrichtung 8 weiterhin dafür sorgt, dass stets ein vollständiger Lichtpuls der Lichtquelle 10 abgelenkt wird. Daher ist bevorzug vorgesehen, dass die Steuervorrichtung 8 einerseits die Dauer eines Lichtpulses auf einen Steuerzeitraum festlegt, wobei derselbe Steuerzeitraum verwendet wird, um die akustische Welle 73 durch den Grundkörper 70 zu senden. Alternativ ist ebenso bevorzugt vorgesehen, dass die Steuervorrichtung 8 während des Steuerzeitraums mehrere vollständige Lichtpulse durch die Lichtquelle 10 aussendet.

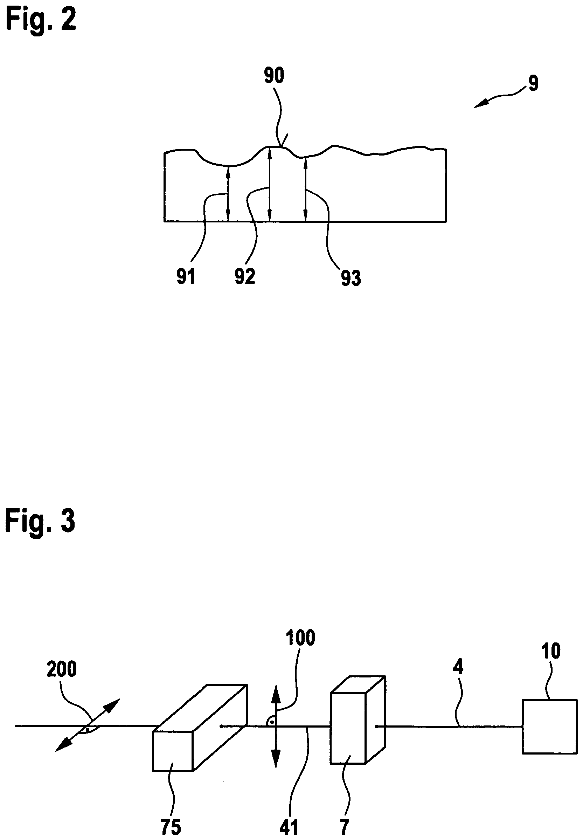

Der von dem ersten Modulator 7 ausgelenkte Strahlengang 41 trifft auf die Phasenplatte 9. Die Phasenplatte 9 weist eine Vielzahl von optischen Dicken auf, die über eine Oberfläche 90 der Phasenplatte 9 variieren. Eine detaillierte Ansicht der Phasenplatte 9 ist aus Fig. 2 ersichtlich.

Fig. 2 zeigt die Phasenplatte 9, wobei beispielhaft eine erste optische Dickte 91, eine zweite optische Dicke 92 und eine dritte optische Dicke 93 eingezeichnet sind. Die erste optische Dicke 91, die zweite optische Dicke 92 und die dritte optische Dicke 93 entstehen durch eine unregelmäßige Oberfläche 90. Somit muss das Licht in Abhängigkeit der Position, durch das es die Phasenplatte 9 durchläuft, unterschiedlich lange optische Wege zurücklegen.

Wie aus Fig. 1 ersichtlich ist, kann der erste Modulator 7 durch die Auslenkung des Strahlengangs 4 unterschiedliche Wege durch die Phasenplatte 9 erzwingen. Somit entsteht eine zeitliche und eine räumliche Variation der Phasenfronten über den Querschnitt des abgelenkten Strahlengangs 41. Die so variierten Lichtpulse werden schließlich durch das optische System 2 auf das Ziel 3 fokussiert.

Es ist jedoch möglich, dass die Lichtpulse zwischen dem optischen System 2 und dem Ziel 3 auf atmosphärische Störungen treffen, die zu Phasenverschiebungen der Lichtpulse führen können. Weiterhin kann eine Oberfläche 30 des Ziels 3 nicht ideal eben sein, so dass auch hier Phasenverschiebungen auftreten. Daher treten in dem Bild einer Kamera 5, die reflektierte Lichtstrahlung von dem Ziel 3 erfassen kann, Störungen in Form von Speckle-Bildungen auf. Da jedoch, wie zuvor beschrieben, die Phasenfrontenverteilung der Lichtpulse über den Querschnitt des Strahlengangs 4 zeitlich und räumlich variiert wird, tritt auch der Speckle-Effekt zeitlich und räumlich variiert auf. Daher kann die Kamera 5 durch eine zeitliche Mittelung der Intensitäten der empfangenen Lichtstrahlung die Auswirkungen des Speckle-Effekts spürbar reduzieren.

Insbesondere kann jeder Lichtpuls ausgelenkt werden, um einen Winkelbereich zu überstreichen, der sich von dem ausgelenkten Zustand bis zu dem maximal ausgelenkten Zustand bei dem ersten Winkel 40 erstreckt. Besonders bevorzugt kann der Lichtpuls aus der unausgelenkten Lage bis zu dem ersten Winkel 40 ausgelenkt werden, um anschließend wieder in die unausgelenkte Lage zurückgelenkt zu werden. Durch das Überstreichen des beschriebenen Winkelbereichs entsteht eine Vielzahl von Speckle-Effekten, die sich bei zeitlicher Mittelung reduzieren oder auslöschen.

Fig. 3 zeigt ein zweites Ausführungsbeispiel der Erfindung, das eine zusätzliche Weiterbildung des ersten Ausführungsbeispiels darstellt. Der Einfachheit halber ist hier lediglich ein Teil der Beleuchtungsvorrichtung 1 gezeigt. Eine Lichtquelle 10 sendet Lichtpulse entlang des Strahlengangs 4 aus, wobei der Strahlengang 4 zunächst den ersten Modulator 7 trifft. Der erste Modulator 7 ist eingerichtet, den Strahlengang 4 in einer ersten Ebene 100 auszulenken. Die erste Ebene 100 ist in Fig. 3 als vertikale Richtung dargestellt. Anschließend trifft der ausgelenkte Strahlengang 41 auf einen zweiten Modulator 75, der insbesondere identisch zu dem ersten Modulator 7 ausgebildet ist. Der zweite Modulator 75 ist dabei bevorzugt derart ausgebildet, dass dieser den ausgelenkten Strahlengang 41 in einer zweiten Ebene 200 ablenken kann. In Fig. 3 ist die zweite Ebene 200 als die horizontale Ebene dargestellt. Es ist daher ersichtlich, dass die erste Ebene 100 und die zweite Ebene 200 senkrecht zueinander angeordnet sind. Somit ist es möglich, den Strahlengang 4 des von der Lichtquelle 10 ausgesandten Lichts in sämtliche Raumrichtungen auszulenken, indem die Auslenkungen des ersten Modulators 7 und des zweiten Modulators 75 kombiniert werden. Somit ist eine größere räumliche und zeitliche Variation des Speckle-Effekts möglich, wodurch dieser weiter reduziert werden kann. Insgesamt stehen daher sehr hochwertige Daten über das beleuchtete Ziel 3 zur Verfügung, so dass diese Daten insbesondere auch für optische Tracking-Verfahren geeignet sind.

### Bezugszeichenliste

- 1: Beleuchtungsvorrichtung
- 2: Optisches System
- 3: Ziel
- 30: Oberfläche des Ziels
- 31: Beleuchteter Zielbereich
- 4: Strahlengang
- 40: Erster Winkel
- 41: Ausgelenkter Strahlengang
- 5: Optischer Sensor
- 6: Atmosphärische Störung
- 7: Erster Modulator
- 70: Grundkörper
- 71: Aktuator
- 72: Absorber
- 73: Welle
- 75: Zweiter Modulator
- 8: Steuervorrichtung
- 9: Phasenplatte
- 90: Oberfläche der Phasenplatte
- 91: Erste optische Dicke der Phasenplatte
- 92: Zweite optische Dicke der Phasenplatte
- 93: Dritte optische Dicke der Phasenplatte
- 10: Lichtquelle
- 100: Erste Richtung
- 200: Zweite Richtung

## Patentansprüche

1. Laserzielbeleuchtungsvorrichtung (1) zur Beleuchtung eines zu bekämpfenden Zieles (3) umfassend
- eine als gepulste Laserlichtquelle ausgebildete Lichtquelle (10) zum Aussenden von Licht entlang eines Strahlengangs (4),
**gekennzeichnet durch**:
- einen ersten Modulator (7), der in den Strahlengang (4) eingebracht ist und eingerichtet ist, eine Richtung des Strahlengangs (4) in einer ersten Ebene (100) auszulenken, wobei der erste Modulator (7) ein akusto-optischer Modulator ist,
- eine Phasenplatte (9), die in den Strahlengang (4) hinter dem Modulator (7) eingebracht ist und die eine Vielzahl von unterschiedlichen optischen Dicken (91, 92, 93) aufweist, und
- eine Steuervorrichtung (8), die mit der Lichtquelle (10) und dem ersten Modulator (7) verbunden ist und die eingerichtet ist, die Lichtquelle (10) und den ersten Modulator (7) zeitlich synchron zueinander anzusteuern und den ersten Modulator (7) mit unterschiedlichen Frequenzen anzusteuern, sodass der Strahlengang (4) für einen jeweiligen Steuerzeitraum einen Winkelbereich überstreicht, der sich von dem unausgelenkten Zustand bis zu einem maximal ausgelenkten Zustand bei einem zufällig bestimmten ersten Winkel (40) erstreckt, um anschließend wieder in die unausgelenkte Lage zurückgelenkt zu werden, und somit entsprechend der jeweiligen Frequenzen über einen zufällig bestimmten Bereich der Phasenplatte (9) ausgelenkt wird, sodass über einen Querschnitt des Strahlengangs (4) statistisch verteilte optische Wegeunterschiede entstehen, wobei die Lichtquelle (10) dazu ausgebildet ist, während jedes Steuerzeitraums zumindest einen vollständigen Lichtpuls auszusenden.

2. Laserzielbeleuchtungsvorrichtung (1) nach Anspruch 1, **dadurch gekennzeichnet, dass** Differenzen der Vielzahl der optischen Dicken (91, 92, 93) der Phasenplatte (9) einen Wert von 1 Mikrometer, insbesondere einen Wert von 5 Mikrometern, nicht unterschreiten und einen Wert von 50 Mikrometern, insbesondere einen Wert von 10 Mikrometern, nicht überschreiten.

3. Laserzielbeleuchtungsvorrichtung (1) nach einem der vorhergehenden Ansprüche, **gekennzeichnet durch** einen zweiten Modulator (75), der insbesondere mit dem ersten Modulator (7) identisch ausgebildet ist, wobei der zweite Modulator (75) eingerichtet ist, eine Richtung des Strahlengangs (4) in einer zweiten Ebene (200) auszulenken, wobei die erste Ebene (100) und die zweite Ebene (200) insbesondere senkrecht zueinander verlaufen.

4. Laserzielbeleuchtungsvorrichtung (1) nach einem der vorhergehenden Ansprüche, **gekennzeichnet durch** einen optischen Sensor (5), insbesondere eine Kamera, der eingerichtet ist, von der Lichtquelle (10) ausgesandete und von dem Ziel (3) reflektierte Lichtstrahlung zu detektieren.

5. Verfahren zum Beleuchten eines Ziels (3) mit einer Laserzielbeleuchtungsvorrichtung (1) nach Anspruch 4, umfassend die folgenden Schritte, die in der angegebenen Reihenfolge ausgeführt werden:
- Aussenden eines Lichtpulses durch die Lichtquelle (10),
- Ansteuern des ersten Modulators (7) und/oder des zweiten Modulators (75) mit unterschiedlichen Frequenzen zum Auslenken des Lichtpulses, sodass der Strahlengang (4) einen Winkelbereich überstreicht, der sich von dem unausgelenkten Zustand bis zu einem maximal ausgelenkten Zustand bei einem zufällig bestimmten ersten Winkel (40) erstreckt, um anschließend wieder in die unausgelenkte Lage zurückgelenkt zu werden, und somit entsprechend der jeweiligen Frequenzen über einen zufällig bestimmten Bereich der Phasenplatte (9) ausgelenkt wird, sodass über einen Querschnitt des Strahlengangs (4) statistisch verteilte optische Wegeunterschiede entstehen, wobei die Schritte des Aussendens und Ansteuerns kontinuierlich wiederholend ausgeführt werden,
- Empfangen jedes ausgesandten und von dem Ziel reflektierten Lichtpulses durch den optischen Sensor (5), und
- Bestimmen eines zeitlichen Mittelwerts der Intensität des empfangenen Lichtpulses.

## Claims

1. Laser target illumination device (1) for illuminating a target (3) to be combatted, comprising
- a light source (10), formed as a pulsed laser light
source, for emitting light along a beam path (4), **characterised by**:
- a first modulator (7), which is introduced into the beam path (4) and is set up to deflect a direction of the beam path (4) in a first plane (100), the first modulator (7) being an acousto-optical modulator,
- a phase plate (9), which is introduced into the beam path (4) downstream from the modulator (7) and which has a plurality of different optical thicknesses (91, 92, 93), and
- a control device (8), which is connected to the light source (10) and to the first modulator (7) and which is set up to actuate the light source (10) and the first modulator (7) temporally synchronously with one another and to actuate the first modulator (7) at different frequencies in such a way that the beam path (4) for a given control period spans an angular range which extends at a randomly determined first angle (40) from the undeflected state to a maximally deflected state so as subsequently to be deflected back into the undeflected position again, and thus is deflected over a randomly determined region of the phase plate (9) in accordance with the associated frequencies, in a manner resulting in optical path differences randomly distributed over a cross-section of the beam path (4), the light source (10) being formed so as to emit at least one complete light pulse during each control period.

2. Laser target illumination device (1) according to claim 1, **characterised in that** differences in the plurality of optical thicknesses (91, 92, 93) of the phase plate (9) do not fall below a value of 1 micrometre, in particular a value of 5 micrometres, and do not exceed a value of 50 micrometres, in particular a value of 10 micrometres.

3. Laser target illumination device (1) according to either of the preceding claims, **characterised by** a second modulator (75), which in particular is formed identically to the first modulator (7), the second modulator (75) being set up to deflect a direction of the beam path (4) in a second plane (200), the first plane (100) and the second plane (200) in particular extending mutually perpendicular.

4. Laser target illumination device (1) according to any of the preceding claims, **characterised by** an optical sensor (5), in particular a camera, which is set up to detect light radiation emitted from the light source (10) and reflected from the target (3).

5. Method for illuminating a target (3) using a laser target illumination device (1) according to claim 4, comprising the following steps, which are carried out in the stated order:
- emitting a light pulse by way of the light source (10),
- actuating the first modulator (7) and/or the second modulator (75) at different frequencies to deflect the light pulse in such a way that the beam path (4) spans an angular range which extends at a randomly determined first angle (40) from the undeflected state to a maximally deflected state so as subsequently to be deflected back into the undeflected position again, and thus is deflected over a randomly determined region of the phase plate (9) in accordance with the associated frequencies, in a manner resulting in optical path differences randomly distributed over a cross-section of the beam path (4), the steps of emitting and actuating being carried out so as to repeat continuously,
- receiving, by way of the optical sensor (5), each light pulse which is emitted and reflected from the target, and
- determining an average over time of the intensity of the received light pulse.

## Revendications

1. Dispositif d'éclairage de cible par laser (1) pour l'éclairage d'une cible (3) à atteindre, comprenant
- une source de lumière (10) réalisée sous la forme d'une source de lumière laser pulsée pour émettre une lumière le long d'un trajet de faisceau (4),
**caractérisé par** :
- un premier modulateur (7) qui est placé dans le trajet de faisceau (4) et conçu pour dévier une direction du trajet de faisceau (4) dans un premier plan (100), le premier modulateur (7) étant un modulateur acousto-optique,
- une plaque de phase (9) qui est placée derrière le modulateur (7) dans le trajet de faisceau (4) et qui présente une pluralité d'épaisseurs optiques différentes (91, 92, 93), et
- un dispositif de commande (8) qui est relié à la source de lumière (10) et au premier modulateur (7) et qui est conçu pour commander la source de lumière (10) et le premier modulateur (7) de manière synchrone dans le temps et pour commander le premier modulateur (7) à des fréquences différentes, de sorte que le trajet de faisceau (4) balaie, pendant une période de commande respective, une plage angulaire qui s'étend de l'état non dévié à un état dévié maximal pour un premier angle (40) déterminé de manière aléatoire, pour être ensuite dévié à nouveau dans la position non déviée, et est par conséquent dévié en fonction des fréquences respectives sur une zone de la plaque de phase (9) déterminée de manière aléatoire, de sorte que des différences de trajet optique statistiquement réparties sont produites sur une section transversale du trajet de faisceau (4), la source de lumière (10) étant conçue pour émettre au moins une impulsion lumineuse complète pendant chaque période de commande.

2. Dispositif d'éclairage de cible par laser (1) selon la revendication 1, **caractérisé en ce que** les différences dans la pluralité d'épaisseurs optiques (91, 92, 93) de la plaque de phase (9) ne sont pas inférieures à une valeur de 1 micromètre, en particulier une valeur de 5 micromètres, et ne dépassent pas une valeur de 50 micromètres, en particulier une valeur de 10 micromètres.

3. Dispositif d'éclairage de cible par laser (1) selon l'une des revendications précédentes, **caractérisé par** un deuxième modulateur (75) qui est en particulier réalisé de manière identique au premier modulateur (7), le deuxième modulateur (75) étant conçu pour dévier une direction du trajet de faisceau (4) dans un deuxième plan (200), le premier plan (100) et le deuxième plan (200) étant en particulier perpendiculaires l'un à l'autre.

4. Dispositif d'éclairage de cible par laser (1) selon l'une des revendications précédentes, **caractérisé par** un capteur optique (5), en particulier une caméra, qui est conçu pour détecter le rayonnement lumineux émis par la source de lumière (10) et réfléchi par la cible (3).

5. Procédé pour éclairer une cible (3) avec un dispositif d'éclairage de cible par laser (1) selon la revendication 4, comprenant les étapes suivantes, qui sont exécutées dans l'ordre indiqué :
- émission d'une impulsion de lumière par la source de lumière (10),
- commande du premier modulateur (7) et/ou du deuxième modulateur (75) à des fréquences différentes pour dévier l'impulsion lumineuse, de sorte que le trajet de faisceau (4) balaye une plage angulaire qui s'étend de l'état non dévié à un état dévié maximal pour un premier angle (40) déterminé de manière aléatoire, pour être ensuite dévié à nouveau dans la position non déviée, et est par conséquent dévié en fonction des fréquences respectives sur une zone de la plaque de phase (9) déterminée de manière aléatoire, de sorte que des différences de trajet optique statistiquement réparties sont produites sur une section transversale du trajet de faisceau (4), les étapes d'émission et de commande étant répétées de manière continue,
- réception, par le capteur optique (5), de chaque impulsion lumineuse émise et réfléchie par la cible, et
- détermination d'une moyenne dans le temps de l'intensité de l'impulsion lumineuse reçue.
